# EUROPEAN PATENT APPLICATION

(11) **EP 4 563 626 A1**
(43) Date of publication of application: **04.06.2025**
(21) Application number: 23213673.9
(22) Date of filing: 01.12.2023
(51) Int. Cl.: C08J 5/04, C08F 222/06, C08J 5/24, C08L 25/08

(54) **RECYCLABLE COVALENTLY ADAPTABLE NETWORKS**

(71) Applicant: Trinseo Europe GmbH, 8808 Pfaeffikon (CH)
(72) Inventor: BOUQUET, Gilbert, 8808 Pfäffikon (CH); LAKEMAN, Pascal, 8808 Pfäffikon (CH); VAN DAELE, Ronald, 8808 Pfäffikon (CH); EEKMAN, Elroy, 8808 Pfäffikon (CH)
(74) Representative: Hoffmann Eitle

(57) **Abstract**

The present invention relates to a recyclable covalently adaptable network having a glass transition temperature of at least 116 °C, a method for preparing a recyclable covalently adaptable network having a glass transition temperature of at least 116 °C, a fibre composite material comprising a covalently adaptable network and a fibre material which is obtainable by prepreg technique, and a fibre composite material comprising a covalently adaptable network and a fibre material which is obtainable by a liquid composite moulding technique.

## Description

### Technical field

The present invention relates to a recyclable covalently adaptable network having a glass transition temperature of at least 116 °C, a method for preparing a recyclable covalently adaptable network having a glass transition temperature of at least 116 °C, a fibre composite material comprising a covalently adaptable network and a fibre material which is obtainable by prepreg technique, and a fibre composite material comprising a covalently adaptable network and a fibre material which is obtainable by a liquid composite moulding technique.

### Background art

Polymers are traditionally separated into the two classes of thermoplastic and thermosetting polymers. Thermoplastics polymer are typically not-crosslinked and are therefore mouldable, i.e. they can assume different shapes upon heating and cooling. In contrast, thermoset polymers are typically crosslinked and cannot change their shape once they have been crosslinked, even when heated. This also gives thermoset polymers improved environmental stress crack resistance and greater mechanical and thermal stability making them the preferred polymers for structural applications. The main drawback of thermoset polymers is their reduced processability, e.g. they cannot be easily recycled.

Covalently adaptable networks, also known as vitrimers, are known to bridge the gap between standard thermoplastic and thermoset polymers. Such covalently adaptable networks are characterised by a dynamic covalent chemistry which is commonly affected by an external stimulus, such as light, heat, etc. Typically, covalently adaptable networks behave like thermoset polymers at low temperature but become thermoplastic at high temperature due to the increasingly dynamic covalent bond formation and breaking between the cross linked polymer chains.

Polymers are often provided in a composite with fibres, e.g. in fibre-reinforced plastics (FRP). FRPs are known to have increased strength and durability compared to the polymers on their own. Thermoset polymers are preferably used over thermoplastic polymers in composites as they are less prone to creep issues.

Standard thermoset polymers, covalently adaptable networks, and composites of either of the foregoing, cannot be recycled without destruction of the polymer backbone. This issue has been tentatively addressed by some inventors who have produced partially recyclable composites. For instance, CN114198984 describes a bisphenol A type epoxy curing agent with a dynamic enamine bond to prepare recyclable epoxy resins. A similar system is described in US 2017/044361A1, which discloses a composition containing besides a thermosetting resin of epoxy type and/or a hardener, at least one vitrimer effect catalyst and at least one polyol selected from linear, branched or cyclic alkanes containing at least two hydroxyl functions. The main drawback in these systems is that in order to be 'recyclable' the thermoset or vitrimer polymer chains have to be degraded separately whereby the polymer is broken down into shorter oligomeric chains. Recycling these oligomeric chains into the original application is often not possible. It could only be made viable by adding significant extra steps making the process not desirable.

### Problem to be solved

The present invention is therefore directed towards the provision of a highly thermomechanically stable, recyclable covalently adaptable network as well as recyclable fibre composites comprising covalently adaptable networks.

### Summary of the invention

The present invention solves the problems of the prior art by the following means.

In a first aspect, the present invention relates to a covalently adaptable network (CAN) having a glass transition temperature (Tg) of at least 116 °C, preferably at least 120 °C, the covalently adaptable network being obtainable by the steps of
(i) providing a copolymer comprising
   - units of a comonomer having reactive sites, and
   - a copolymer backbone,
(ii) providing a crosslinking agent configured to react with the reactive sites, and
(iii) contacting the crosslinking agent with the copolymer and crosslinking the copolymer to obtain the covalently adaptable network,
whereupon decrosslinking the covalently adaptable network, the copolymer backbone remains intact.

In a second aspect, the present invention relates to a method for preparing a covalently adaptable network (CAN) having a glass transition temperature (Tg) of at least 116 °C, preferably at least 120 °C, comprising the steps of:
(i) providing a copolymer comprising
   - units of a comonomer having reactive sites, and
   - a copolymer backbone,
(ii) providing a crosslinking agent configured to react with the reactive sites, and
(iii) contacting the crosslinking agent with the copolymer and crosslinking the copolymer to obtain the covalently adaptable network,
whereupon decrosslinking the covalently adaptable network, the copolymer backbone remains intact.

In a third aspect, the present invention relates to a method of recycling the covalently adaptable network according to the first aspect, wherein the method comprises a step of decrosslinking the covalently adaptable network whereupon the polymer backbone remains intact, and which is effected by thermolysis or solvolysis, preferably by hydrolysis, aminolysis or alcoholysis, more preferably by alcoholysis.

In a fourth aspect, the present invention relates to a fibre composite material, comprising a covalently adaptable network and a fibre material, wherein the fibre composite material is obtainable by a prepreg technique comprising the steps of:
(I) providing a copolymer comprising
   - units of a comonomer having reactive sites, and
   - a copolymer backbone,
(II) providing a crosslinking agent configured to react with the reactive sites,
(III) dissolving the copolymer and the crosslinking agent in a solvent to obtain a dissolved covalently adaptable network precursor composition,
(IV) impregnating the fibre material with the dissolved covalently adaptable network precursor composition,
(V) evaporating the solvent, and
(VI) crosslinking the copolymer to obtain the covalently adaptable network and consolidating the fibre composite material, optionally by utilizing a further manufacturing processing step, such as stamp forming, thermoforming, compression moulding, vacuum assisted moulding, press consolidation, automated fibre and tape placement, automated fibre and tape winding, autoclave consolidation,3D printing, and/or layering to form a laminate,
whereupon decrosslinking the covalently adaptable network, the copolymer backbone remains intact.

In a fifth aspect, the present invention relates to a fibre composite material, comprising a covalently adaptable network and a fibre material, wherein the material is obtainable by a liquid composite moulding technique, comprising the steps of:
(a) providing a copolymer comprising
   - units of a comonomer having reactive sites, and
   - a copolymer backbone,
(b) providing a crosslinking agent,
(c) dissolving the copolymer and the crosslinking agent in a curable solvent comprising
   (c.1) a first type of curable molecules, and
   (c.2) optionally, a second type of curable molecules, further comprising reactive groups configured to react with the crosslinking agent, wherein the first type and the second type of curable molecules are different from each other and are configured to copolymerise into a copolymer upon curing,
   to obtain a liquid resin covalently adaptable network precursor composition,
(d) transferring the liquid resin covalently adaptable network precursor composition into a mould containing the fibre material, and
(e) curing the liquid resin covalently adaptable network precursor composition, and crosslinking the copolymer to obtain a covalently adaptable network and consolidating the fibre composite material, optionally by utilizing a further manufacturing processing step, such as vacuum assisted resin infusion, resin transfer moulding, wet layup, hand layup, pultrusion, filament winding,3D printing, and/or layering to form a laminate
whereupon decrosslinking the covalently adaptable network, the copolymer backbone remains intact.

In a sixth aspect, the present invention relates to a method of processing the covalently adaptable network according to the first aspect, wherein the method includes any of injection moulding, sheet and film extrusion, blow moulding, coating, dipping, fused deposition modelling, and spraying.

In a seventh aspect, the present invention relates to a use of the covalently adaptable network according to the first aspect and/or the fibre composite materials according to the fourth and/or the fifth aspects in an article, preferably said article being any of electronics equipment, aerospace materials, wind turbines, casings, marine structures, pipes, tanks, construction structures, transportation vehicles and/or infrastructure, defence materials, consumer goods, circuit boards, and battery casings.

### Brief description of the drawings

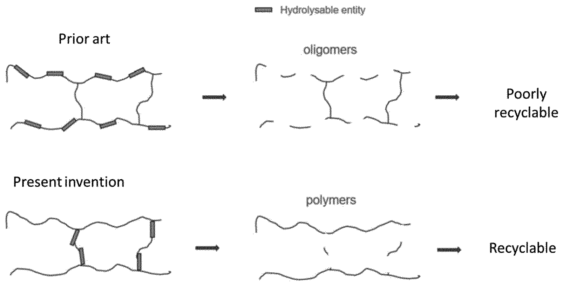

Figure 1 depicts a schematic overview of the recyclability principle of the present invention.

### Detailed description of the invention

### Covalently adaptable network

In a first aspect, the present invention relates to a covalently adaptable network (CAN) having a glass transition temperature (Tg) of at least 116 °C, preferably at least 120 °C, the covalently adaptable network being obtainable by the steps of:
(i) providing a copolymer comprising
   - units of a comonomer having reactive sites, and
   - a copolymer backbone,
(ii) providing a crosslinking agent configured to react with the reactive sites, and
(iii) contacting the crosslinking agent with the copolymer and crosslinking the copolymer to obtain the covalently adaptable network,
whereupon decrosslinking the covalently adaptable network, the copolymer backbone remains intact.

The term "covalently adaptable network" as used herein, has its customary meaning as used in the art and may be taken synonymously with the term "vitrimer". As such, the term describes a polymer network with a dynamic covalent chemistry, characterised in that its topology can undergo changes when subjected to external stimuli such as heat and light.

The term "copolymer" as used herein has its customary meaning as used in the art. The following description is merely for illustrative purposes. The copolymer is a copolymer material substantially consisting of copolymer chains.

In the copolymer, said polymer chains comprise units of at least two comonomers. The term "monomer" as used herein describes a molecule of a first type that is able to undergo polymerisation with other molecules. Said other molecules may be other molecules of the first type, molecules of a second type and optionally further types, or molecules of the first, second and optionally further types. Having undergone polymerization and being incorporated into the polymer chain, the term "unit of monomer" refers to the chemical unit in the polymer which corresponds to the previous monomer. The units of monomers may also be described as "repeating units".

If molecules of the first type only undergo polymerization with other molecules of the first type, then only one monomer is present, which may also be referred to as a homomonomer. Homomonomers polymerise to form homopolymers consisting of units of homomonomers. The broader term "monomer" includes homomonomers. For instance, a monomer being a molecule "A" may polymerise to form a polymer " [...]-A-A-A-A-[...] ", which in turn consists of units of monomers "-A-". For instance, ethylene molecules (=monomers) may polymerise to form polyethylene (=polymer), which in turn consists of ethylene units (=units of monomer).

If the molecules of the first type undergo polymerisation with molecules of the second type and optionally further types, then the molecules of the first, second and optionally further types are comonomers respectively. Comonomers polymerise to form copolymers consisting of units of comonomers. The broader term "monomer" includes comonomers. For instance, a comonomer being a molecule "A" may polymerise with a comonomer being a molecule "B" to form a copolymer "[...]-A-B-A-A-[...] ", which in turn consists of units of comonomers "-A-" and "-B-".

If the molecules of the first type (comonomers "A") only polymerise with molecules of the second type (comonomers "B") and optionally other molecules "A", then two comonomers are present and a binary copolymer is formed. If the molecules of the first type (comonomers "A") polymerise with molecules of a second type (comonomers "B") and molecules of a further type (comonomers "C") and optionally other molecules "A", then three comonomers are present and a ternary copolymer (=terpolymer) is formed.

The number of comonomers for any given type of copolymer according to the present invention is not particularly limited. In a preferred embodiment, it is at most 5, more preferably at most 4, more preferably at most 3, and even more preferably 2. Accordingly, the copolymer according to the present invention is preferably at most a quinary copolymer, more preferably at most a quaternary copolymer, more preferably at most a tertiary copolymer (terpolymer), and even more preferably a binary copolymer.

The term "copolymer" includes any type of sequence of units of comonomers in the polymer chains, such as random copolymers with a random sequence (e.g. "[...]-A-B-A-A-A-B-[...]"), block copolymers with blocks of identical sequences (e.g. "[...]-A-A-A-[...]-B-B-B-[...]"), and repeating copolymers with a repeating/alternating sequence (e.g. "[...]-A-B-A-B-[...]") .

The copolymer provided in step (i) comprises
- units of a comonomer having reactive sites, and
- a copolymer backbone.
Unless otherwise specified, the copolymer as provided in step (i) may hereinafter also be referred to as "the copolymer".

The term "reactive site" as used herein refers to a chemical moiety that is able to undergo a chemical reaction. Said chemical moiety may be a functional group or a set of functional groups. The reactive site is configured to react with the crosslinking agent as further defined below.

The term "copolymer backbone" as used herein has its customary meaning as used in the art. The following description is merely for illustrative purposes. The copolymer backbone may be understood as the chain of atoms connected through bonds to which all other chemical moieties such as functional groups may be regarded as pendant. Typically, the copolymer backbone consists of bonds between neighbouring units of comonomers and the shortest chain of atoms within units of comonomers that connect those atoms in the unit of comonomer which bond to the respective neighbouring unit of comonomer. In the copolymer of the present invention, the reactive sites are pendant to the copolymer backbone; that is to say, the polymer backbone does not run through the reactive sites. Rather, the reactive sites are attached to the copolymer backbone. Said attachment may include but is not limited to a bond, a plurality of bonds, or a linking group. The linear copolymer is preferably not a graft copolymer.

In a preferred embodiment, the copolymer is a linear copolymer having a linear backbone.

In step (ii) a crosslinking agent is provided which is configured to react with the reactive sites on the units of the comonomers. The crosslinking agent and the reactive sites therefore have complementary reactivity. The term "crosslinking agent" as used herein may be taken synonymously with the term "crosslinker". The term describes molecules that are able to connect individual polymer chains with each other through branched connections which may also be referred to as "crosslinks". Typically, the crosslinking agent will have at least two sites which can connect to at least two individual chains.

The reaction between the reactive site and the crosslinking agent is herein referred to as the "crosslinking reaction". The crosslinking reaction results in a bond with the crosslinking agent through the reacted site. The term "reacted site" as used herein describes the chemical moiety that is formed when the reactive site reacts with the crosslinking agent. In an exemplary embodiment, the crosslinking reaction may be described as CA + RS1 -> RS2-CA, wherein "CA" is the crosslinking agent, "RS1" is the reactive site, and "RS2-CA" describes the moiety bonded to the crosslinking agent through the reacted site.

The crosslinking reaction is reversible. In the context of the crosslinking reaction according to the present disclosure, the term "reversible" herein includes directly reversible, and reversible via an intermediate compound or a set of intermediate compounds. In an exemplary embodiment, if the forward reaction is CA + RS1 -> RS2-CA as described above, the reversible reaction may be RS2-CA -> CA + RS1, i.e. directly reversible, or RS2-CA -> I -> CA + RS1, wherein I is an intermediate or a set of intermediates.

In an exemplary embodiment, if the crosslinking agent is an alcohol and the reactive site is an anhydride, the crosslinking reaction results in the reacted site being an ester and the formation of a carboxylic acid. In this case, the reverse reaction may be a direct reformation of the anhydride, or the reverse reaction may be the reformation of the anhydride via an intermediate such as carboxylic acid.

In step (iii) the crosslinking agent is contacted with the copolymer and the copolymer is crosslinked to obtain the covalently adaptable network. Since the reactive sites are on units of comonomers of the copolymer, the reaction of the crosslinking agent with the reactive sites results in the crosslinking agent and the units of comonomers being bonded to each other through the reacted site. Different individual chains of copolymers are thus connected to each other through the crosslinking agent. Effecting said process is herein referred to as "crosslinking the copolymer", and through said process the covalently adaptable network is obtained. Since the reactive sites are pendant to the copolymer backbone, upon crosslinking the copolymer, the reacted sites are also pendant to the copolymer backbone and the copolymer backbone remains intact. That is to say, the topology of the copolymer backbone is retained upon crosslinking the copolymer. Effecting the crosslinking may be achieved simply by contacting the crosslinking agent with the copolymer, or by mixing the crosslinking agent with the copolymer, or through an external stimulus such as heating, irradiating with light, or the addition of a catalyst.

As described above, the crosslinking reaction is reversible. Said reversibility of the crosslinking reaction preferably gives rise to the dynamic covalent chemistry characterising the covalent adaptable network. For instance, at low temperature, the position of equilibrium for the reversible crosslinking reaction may favour the static crosslinked state and the dynamic exchange of the crosslinks is inhibited. Thus, the covalently adaptable network behaves like a crosslinked thermoset polymer at low temperature as the network topology is fixed. Upon heating the covalently adaptable network, the equilibrium may favour decrosslinking and/or exchange of crosslinks through the reversible reactions. The network topology of the covalently adaptable network therefore becomes more dynamic and the material behaves like a non-crosslinked, thermoplastic polymer at high temperatures. This means that material flow is possible, unlike permanently crosslinked thermosets. Hence, upon heating the material becomes malleable, re-shapable, and weldable.

Since the copolymer backbone remains intact during the crosslinking reaction it follows that the backbone also remains intact during the reverse reaction. Upon decrosslinking the covalently adaptable network, the copolymer backbone remains intact. That is to say, the topology of the copolymer backbone is retained upon decrosslinking. The term "decrosslinking the covalently adaptable network" as used herein refers to reactions which break the connection between the crosslinking agent and the individual chains of copolymers through the reacted site. Said reactions include but are not limited to the reverse reactions from the crosslinking reaction in which the reactive site is reformed, for instance in the set of reactions giving rise to dynamic covalent chemistry. In a preferred embodiment, upon decrosslinking the covalently adaptable network the reactive site is reformed.

The covalently adaptable network of the present invention has a glass transition temperature (Tg) of at least 116 °C, preferably at least 120 °C.

The glass transition temperature is measured using differential scanning calorimetry (DSC) following the ASTM D3418 protocol.

Without wishing to be bound by theory, the present inventors submit that a covalently adaptable network according to claim 1
- which has a glass transition temperature of at least 116 °C,
- and whereupon decrosslinking the covalently adaptable network the copolymer backbone remains intact,
is particularly favourable for structural applications. The present inventors consider that the high glass transition temperature of at least 116 °C leads to favourable thermomechanical properties and low creep making the covalently adaptable network suitable for structural applications wherein the material is exposed to a great amount of stress such as in windmill blades. Similarly, due to the high Tg the covalently adaptable network may be exposed to moderate heat whilst retaining a thermoset character which is suitable in applications such as printed circuit boards which suffer from exposure to resistive heat. On the other hand, the copolymer backbone remaining intact upon decrosslinking means that the covalently adaptable network can be recycled without having to break down the copolymer into smaller oligomers, thereby making the recycling process more sustainable.

In a preferred embodiment of the first aspect of the present invention, the covalently adaptable network is recyclable.

Preferably, the covalently adaptable network is recyclable, wherein at least 60 wt% of the material are recoverable according to the method for recycling which is further disclosed below. More preferably, at least 70 wt% of the material are recoverable, even more preferably at least 80 wt%, even more preferably at least 90 wt%, and even more preferably at least 95 wt%.

In a preferred embodiment of the first aspect of the present invention, the reactive sites comprise anhydride and/or imide groups and the crosslinking agent comprises at least two nucleophilic moieties.

The term "nucleophilic moieties" as used herein has its customary meaning as used in the art and refers to functional groups with nucleophilic reactive character towards the reactive site. In the aforementioned embodiment, the nucleophilic reactive character of the nucleophilic moieties is configured to undergo an addition and/or substitution reaction at the carbonyl group of the anhydride and/or imide of the reactive sites. Preferably, the reactive sites are anhydride groups and/or imide groups.

Preferably, the crosslinking agent is a polyol, a polyamine, a polythiol, or an agent having mixed functionality of any of the above. This means that the crosslinking agent may be any of a mixed poly(aminoalcohol), poly(thioalcohol), poly(aminothiol), or a poly(aminothioalcohol). Most preferably, the crosslinking agent is a polyol.

The crosslinking agent being polyol, a polyamine, a polythiol, or an agent having mixed functionality of any of the above, is able to undergo multiple nucleophilic substitution reactions at the carbonyl groups of the anhydrides and/or imides of the reactive sites on multiple individual copolymer chains. Said nucleophilic substitution reactions result in a connection between the crosslinking agent and the copolymer through the reacted site, the reacted site typically being an ester, an amide, a thioester, or any combination thereof, respectively.

In some embodiments, the polyols include but are not limited to polymeric or oligomeric diols, long chain aliphatic diols and/or fluorinated diols. In some embodiments, the polyol may be poly(tetrahydrofuran), Voranol CP-450, polycaprolactone diol, 1,12-dodecanediol, isosorbide, 2,4-diethyl-1,5-pentanediol, 2,2-diethyl-1,3-propanediol, 2-methyl-1,3-propanediol, 2-butyne-1,4-diol, ,2,3,3,4,4,5,5-octafluoro-1,6-hexanediol, 2,2,3,3-tetrafluoro-1,4-butanediol. In preferable embodiments, the polyols are short aliphatic polyols. Preferred polyols include glycerol, trimethylolpropane, 1,3-Propanediol, 1,4-butanediol, 1,5-pentanediol, 1,6-hexanediol), 1,4-bis(hydroxymethyl)cyclohexane, 1,4-benzenedimethanol, 2-butyne-1,4-diol, N-methyl diethanolamine, 3,4-bis(hydroxymethyl)furan, 2,2-dibenzyl-1,3-propanediol, 3-methyl-1,5-pentanediol, 2-phenyl-1,3-propanediol, diethylene glycol, and triethylene glycol.

Preferred polyamines include but are not limited to tris(3-aminopropyl)amine, diethylenetriamine, bis(hexamethylene)triamine, tris(2-aminoethyl)amine, Priamine 1074, and aliphatic diamines, such as 1,4-diaminobutane, and 1,6-diaminohexane.

Preferred polythiols include but are not limited to, hexa(ethylene glycol)dithiol, pentaerythritol tetrakis(3-mercaptopropionate), and 1,12-dodecanethiol.

Preferred crosslinking agents having mixed functionality of any of the above include but are not limited to ethanolamino agents, such as 2-(2-aminoethoxy)ethanol or bis(2-propanol)amine.

In a preferred embodiment of the first aspect of the present invention, the polymer backbone substantially consists of carbon atoms attached to each other via C-C bonds.

In one embodiment, the polymer backbone comprises at least 90% carbons atoms relative to the total number of atoms in the backbone attached to each other via C-C bonds, preferably at least 91% carbon atoms, more preferably at least 92% carbon atoms, more preferably at least 93% carbon atoms, more preferably at least 94% carbon atoms, more preferably at least 95% carbon atoms, more preferably at least 96% carbon atoms, more preferably at least 97% carbon atoms, more preferably at least 98% carbon atoms, more preferably at least 99% carbon atoms, and even more preferably at least 99.9% carbon atoms. In one embodiment, the polymer backbone consists of carbon atoms attached to each other via C-C bonds. In a preferred embodiment, the C-C bonds are C-C single bonds.

In a preferred embodiment of the first aspect of the present invention, the copolymer is a styrene-maleic anhydride (SMA) copolymer or an at least partially imidized SMA copolymer (SMI) .

The term "at least partially imidized SMA copolymer" (SMI) describes a copolymer based on SMA, wherein at least a portion of the units of maleic anhydride comonomers are imidized to be units of maleic imide comonomers, wherein the imidic N-atom may have an H attached to it or be further functionalised by a phenyl or other organic group. As such, the term includes pure SMI copolymer which is a binary copolymer comprising units of styrene and maleic imide comonomers respectively, as well as ternary copolymers comprising units of styrene, maleic imide, and maleic anhydride comonomers respectively. For instance, in embodiments, the ratio of units of maleic imide comonomers to units of maleic anhydride monomers may be from 1:99 to 100:0. In some embodiments, the ratio of units of maleic imide comonomers to units of maleic anhydride monomers may be from 5:95 to 20:80, from 20:80 to 35:65, 50:50, from 65:35 to 80:20, from 80:20 to 95:5, and/or any permutation thereof.

When the copolymer is SMA or SMI, the units of comonomers having the reactive sites are the maleic anhydride comonomer units and/or the maleic imide comonomer units respectively. In said units of comonomers, the maleic anhydride groups and/or the maleic imide groups are the reactive sites respectively. Said reactive sites are typically configured to react with a polyol, a polyamine, a polythiol, and/or a mixed functionality crosslinking agent, preferably a polyol. Said reaction between the reactive sites and the polyol, polyamine, polythiol and/or a mixed functionality crosslinking agent is consistent with the nucleophilic substitution reaction at the carbonyl group described in further detail above.

In a preferred embodiment of foregoing preferred embodiment of the first aspect of the present invention, the weight average molecular weight of the SMA and/or SMI is least 5,000 g/mol.

The weight average molecular weight may be measured using gel permeation chromatography (GPC) using narrow molecular weight polystyrene standards, preferably with a dispersity of less than 1.1, THF as a solvent and a UV or diode array detector with a typical detection wavelength of 254 nm.

Preferably, the weight average molecular weight of the SMA and/or SMI is at least 10,000 g/mol, more preferably at least 20,000 g/mol, more preferably 30,000 g/mol, more preferably at least 40,000 g/mol, more preferably 50,000 g/mol, more preferably at least 60,000 g/mol, more preferably 70,000 g/mol, more preferably at least 80,000 g/mol, more preferably 90,000 g/mol, and even more preferably at least 100,000 g/mol.

Without wishing to be bound by theory, the present inventors submit that the Tg of the covalently adaptable network may be controlled through the weight average molecular weight of the SMA and/or SMI in a manner broadly consistent with the Flory-Fox equation. A weight average molecular weight of at least 5,000 g/mol may therefore be used to used to obtain favourably high glass transition temperatures.

In a preferred embodiment, the maleic anhydride and/or maleic imide content is at least 5 wt% based on the total weight of the copolymer provided in step (i).

Preferably, the maleic anhydride (MA) and/or maleic imide (MI) content is at least 10 wt%, more preferably at least 15 wt %, and even more preferably at least 20 wt%. In a particularly preferred embodiment, the maleic anhydride and/or maleic imide content is 23 wt%.

The Tg of the covalently adaptable network may be controlled through the MA and/or MI content in the SMA and/or SMI. Generally speaking, as the MA and/or MI content in the SMA and/or SMI increases, the Tg increases as well. For a given content, MI being present in the covalently adaptable network generally yields a higher Tg than MA.

The covalently adaptable network may be characterised by the functional group ratio of maleic anhydride and/or partially imidized maleic anhydride to the crosslinking agent. The term "functional group ratio" as used herein refers to the ratio FG(MA and/or MI):FG(crosslinker)', wherein "FG(MA and/or MI)" is the total number of functional groups at the reactive sites which are configured to react with the crosslinker nucleophilic moieties in any given SMA and/or SMI provided in step (i), and wherein "FG(crosslinker)" is the total number nucleophilic functional groups in any given crosslinking agent provided in step (ii). The FG(MA and/or MI) is determined by multiplying the amount of SMA and/or SMI provided in step (i) with the maleic anhydride and/or maleic imide content of the SMA and/or SMI and converted into molar units. Likewise, the FG(crosslinker) is determined by multiplying the amount of crosslinking agent provided in step (ii) with the number of nucleophilic moieties which are configured to react with the maleic anhydride and/or maleic imide of the SMA and/or SMI per crosslinking agent molecule, and converted into molar units. Thus, the functional group ratio being lower than 1:1 means that it is (<1):1 or 1: (>1), i.e., the crosslinker is in excess. Similarly, the functional group ratio being higher than 1:1, means that it is (>1):1 or 1:(<1), i.e. the MA and/or MI is in excess.

The present inventors submit that the Tg of the covalently adaptable network is affected by the functional group ratio. It is believed that when the content of crosslinking agent relative to reactive site increases, the Tg increases. However, this effect may be countered by a decrease in Tg due to the greater relative content of a lighter crosslinking agent.

In preferred embodiment of the first aspect of the present invention, the covalently adaptable network has a glass transition temperature (Tg) of at least 130 °C.

Preferably, the glass transition temperature is at least 132 °C, more preferably at least 134 °C, more preferably at least 136 °C, more preferably at least 138 °C, more preferably at least 140 °C, more preferably at least 142 °C, more preferably at least 144 °C, more preferably at least 146 °C, more preferably at least 148 °C, more preferably at least 150 °C, more preferably at least 152 °C, more preferably at least 154 °C, more preferably at least 156 °C, more preferably at least 158 °C, and even more preferably at least 160 °C.

In a preferred embodiment of the first aspect of the present invention, the covalently adaptable network has a stiffness of at least 1 GPa.

The stiffness may be measured according to ISO527-4.

Preferably, the covalently adaptable network has a stiffness of at least 1.2 GPa, more preferably at least 1.4 GPa, more preferably at least 1.6 GPa, more preferably at least 1.8 GPa, more preferably at least 2.0 GPa, more preferably at least 2.2 GPa, more preferably at least 2.4 GPa, more preferably at least 2.8 GPa, more preferably at least 3.0 GPa, more preferably at least 3.2 GPa, more preferably at least 3.4 GPa, more preferably at least 3.6 GPa, more preferably at least 3.8 GPa, more preferably at least 4.0 GPa, more preferably at least 4.2 GPa, more preferably at least 4.4 GPa, more preferably at least 4.6 GPa, more preferably at least 4.8 GPa, and even more preferably at least 5.0 GPa.

In a preferred embodiment of the first aspect of the present invention, the covalently adaptable network has a failure strain of at least 2%.

The failure strain may be measured by/according to ISO527-4.

Preferably, the failure strain is at least 3%, more preferably at least 4%, more preferably at least 5%, more preferably at least 6%, and even more preferably at least 7%. Preferably, the covalently adaptable network has a flexural failure strain of at least 2%, more preferably at least 3%, and even more preferably at least 4%, wherein the flexural failure strain is measured according to ISO 14125.

Preferably, the covalently adaptable network has a flexural strength (FS) of at least 10 MPa, more preferably at least 30 MPa, more preferably at least 40 MPa, and even more preferably at least 50 MPa. The flexural strength is measured according to ISO 14125.

Preferably, the covalently adaptable network has a flexural modulus of at least 15 GPa, more preferably at least 16 GPa, more preferably at least 17 GPa, more preferably at least 18 GPa, more preferably at least 19 GPa, more preferably at least 20 GPa, more preferably at least 21 GPa, more preferably at least 22 GPa, more preferably at least 23 GPa, more preferably at least 24 GPa, more preferably at least 25 GPa, and even more preferably at least 26 GPa. The flexural modulus is measured according to ISO 14125.

In a preferred embodiment of the first aspect of the present invention, decrosslinking the covalently adaptable network can be effected by thermolysis or solvolysis.

Preferably, solvolysis is any of hydrolysis, aminolysis or alcoholysis, or a combination thereof. Aminolysis may be carried out using benzyl amine. Most preferably, decrosslinking the covalently adaptable network can be effected by alcoholysis.

### Method of preparing the covalently adaptable network

In a second aspect, the present invention relates to a method for preparing a covalently adaptable network (CAN) having a glass transition temperature (Tg) of at least 116 °C, preferably at least 120 °C, comprising the steps of:
(i) providing a copolymer comprising
   - units of a comonomer having reactive sites, and
   - a copolymer backbone,
(ii) providing a crosslinking agent configured to react with the reactive sites, and
(iii) contacting the crosslinking agent with the copolymer and crosslinking the copolymer to obtain the covalently adaptable network,
whereupon decrosslinking the covalently adaptable network, the copolymer backbone remains intact.

The definitions of terms from the first aspect apply *mutatis mutandis* to the second aspect.

Preferably, the covalently adaptable network of the second aspect is the covalently adaptable network of the first aspect.

### Method of recycling the covalently adaptable network

In a third aspect, the present invention relates to a method of recycling the covalently adaptable network according to the first aspect, wherein the method comprises a step of decrosslinking the covalently adaptable network whereupon the polymer backbone remains intact, and which is effected by thermolysis or solvolysis, preferably by hydrolysis, aminolysis or alcoholysis, more preferably by alcoholysis.

The definitions of terms from the first aspect apply *mutatis mutandis* to the third aspect.

In a preferred embodiment, the method of recycling the covalently adaptable network comprises contacting the covalently adaptable network with a solvent, preferably an alcohol, which undergoes nucleophilic substitution reactions at the carbonyl groups at the reacted sites, thereby breaking the connection between the crosslinking agent and the individual chains of copolymers through the reacted site and decrosslinking the covalently adaptable network. Said reactions may be further effected by heating and/or using catalysis. The polymer backbone of the copolymer provided in step (i) remains intact, whereby the recovered copolymer can be easily recycled. In one embodiment, the recovered copolymer is the copolymer provided in step (i). In another embodiment, the recovered copolymer structurally differs from the copolymer provided in step (i) at the reactive site. For instance, in one embodiment the copolymer provided in step (i) bears a maleic anhydride group at the reactive site, whereas the recovered polymer bears an ester at the corresponding site, e.g. a methyl ester if methanol is used in the alcoholysis.

In preferred embodiment, at least 60 wt% of the material are recoverable, preferably at least 70 wt%, more preferably at least 80 wt%, more preferably at least 90 wt%, and even more preferably at least 95 wt%.

### Prepreg fibre composite material

In a fourth aspect, the present invention relates to a fibre composite material, comprising a covalently adaptable network and a fibre material, wherein the fibre composite material is obtainable by a prepreg technique comprising the steps of:
(I) providing a copolymer comprising
   - units of a comonomer having reactive sites, and
   - a copolymer backbone,
(II) providing a crosslinking agent configured to react with the reactive sites,
(III) dissolving the copolymer and the crosslinking agent in a solvent to obtain a dissolved covalently adaptable network precursor composition,
(IV) impregnating the fibre material with the dissolved covalently adaptable network precursor composition,
(V) evaporating the solvent, and
(VI) crosslinking the copolymer to obtain the covalently adaptable network and consolidating the fibre composite material, optionally by utilizing a further manufacturing processing step, such as stamp forming, thermoforming, compression moulding, vacuum assisted moulding, press consolidation, automated fibre and tape placement, automated fibre and tape winding, autoclave consolidation, 3D printing, and/or layering to form a laminate,
whereupon decrosslinking the covalently adaptable network, the copolymer backbone remains intact.

The fibre composite material of the fourth aspect may also be referred to as a "prepreg fibre composite material". Unless specified otherwise, the expression "the fibre composite material" or simply "the composite" in this aspect of the present disclosure relates to the fibre composite material according to the fourth aspect.

The definitions of terms from the first aspect apply *mutatis mutandis* to the fourth aspect.

The present disclosure also relates to a method for preparing the fibre composite material according to the fourth aspect. The definitions and steps further described below apply to the fibre composite and the method for preparing the fibre composite material *mutatis mutandis.*

In a preferred embodiment, the covalently adaptable network which is comprised in the fibre composite material according to the fourth aspect of the present invention is the covalently adaptable network of the first aspect. As such, all limitations of the covalently adaptable network of the first aspect may apply individually or in combination to the covalently adaptable network which is comprised in the fibre composite material according to the fourth aspect, *mutatis mutandis.* Similarly, all limitations to the copolymer and the crosslinking agent disclosed in the first aspect may apply individually or in combination *mutatis mutandis* to the fourth aspect.

Preferably the covalently adaptable network which is comprised in the fibre composite material according to the fourth aspect has a Tg of at least 116 °C, preferably at least 120 °C. The Tg is determined in the same way as in the first aspect.

The term "fibre material" as used herein, refers to a material substantially consisting of fibres, preferably consisting of fibres. A fibre is a material form characterised in a length and a diameter, wherein said form has a very high aspect ratio of length to diameter. Typically, fibres are flexible along their length dimension but substantially less flexible, preferably inflexible, around their diameter. The term "fibre" may be used synonymously with the term "filament".

The steps (I) and (II) of the third aspect are typically identical to the steps (i) and (ii) of the first and the second aspect. In step (III), the copolymer and the crosslinking agent are dissolved in a solvent to obtain a dissolved covalently adaptable network precursor composition. The dissolved covalently adaptable network precursor composition is a solution comprising solvent and dissolved covalently adaptable network precursor material. Preferably, this composition does not comprise a covalently adaptable network but merely precursor material. The solvent used may herein also be referred to as a "prepreg solvent".

In a preferred embodiment, the prepreg solvent is a non-toxic and low boiling point. Preferably, solvents from renewable resources may be used such as limonene, methyl THF, dimethyl carbonate.

In a preferred embodiment, the solvent is any of acetone, methyl ethyl ketone, tetrahydrofuran, cyclohexanone, diethyl ether, dimethylformamide (DMF), dimethylsulfoxide (DMSO), N-methyl pyrrolidone (NMP), dichloromethane (DCM), chloroform, toluene, ethyl benzene, ethyl acetate.

In step (IV) the fibre material is impregnated with the dissolved covalently adaptable network precursor composition. In step (V), the solvent is then evaporated from the impregnated fibre material. Said evaporation may be effected by any known means, such as heating, initiating an airflow, reducing the ambient pressure, etc.

Step (VI) comprises crosslinking the copolymer to obtain the covalently adaptable network. In one embodiment, effecting the crosslinking may be achieved simply by contacting the crosslinking agent with the copolymer, or by mixing the crosslinking agent with the copolymer, or by evaporating the solvent in step (IV), or through an external stimulus such as heating, irradiating with light, or the addition of a catalyst, or a combination of any of the above.

Step (VI) further comprises a step of consolidating the fibre composite material. The step of consolidating the fibre composite material may occur simultaneously with crosslinking the copolymer to obtain the covalently adaptable network or the steps may occur sequentially. "Consolidating the fibre composite material" means consolidating the covalently adaptable network and the fibre material into the fibre composite material. Optionally, consolidating the fibre composite material may utilize a further manufacturing processing step, such as thermoforming, compression moulding, vacuum assisted moulding, press consolidation, automated fibre and tape placement, automated fibre and tape winding, autoclave consolidation, 3D printing, and/or layering to form a laminate. Through such an optional further manufacturing processing step, the fibre composite material can be further strengthened. Moreover, through such a further manufacturing processing step, the fibre composite material can be arbitrarily shaped and/or moulded into a fibre composite article.

Without wishing to be bound by theory, the present inventors submit that through said prepreg technique a favourable adhesion between the covalently adaptable network and the fibre material can be achieved, resulting in a fibre composite material with dynamic covalent chemistry which is simultaneously recyclable. Moreover, said prepreg technique achieves a favourable and consistent mixing between the covalently adaptable network and the fibre material which affords the material strong thermomechanical performance. The favourable mixing leading to the strong thermomechanical performance may be further effected through controlling the viscosity of the dissolved covalently adaptable network precursor composition, said viscosity leading to a good impregnation of the fibre material in step (IV), with the dissolved covalently adaptable network precursor composition moving into the inter-fibre space. The obtained fibre composite material is recyclable by re-dissolving the fibre composite material in a solvent, de-crosslinking the covalently adaptable network as described in the first aspect, filtering out the fibre material, and drying the filtrate to obtain recovered copolymer, the crosslinking agent, and the fibre material. Recovered copolymer, crosslinking agent, and material fibre material may be re-used in a similar process, such as making new fibre composite materials.

The fibre material may be any of a continuous and/or discontinuous fibre material, glass fibre material, carbon fibre material, aramid fibre material, basalt fibre material, and/or natural fibre material in the form fabrics, such as non-woven, woven, unidirectional, continuous filament mat, chopped strand mat, and direct rovings.

The term "continuous" as used herein, characterises a fibre with a very high length-to-diameter aspect ratio. In one embodiment, the aspect ratio is at least 10,000, preferably at least 25,000 more preferably at least 50,000, and even more preferably at least 100,000. In one embodiment, the diameter of a continuous fibre is between 1-200 µm. In one embodiment, the length of a continuous fibre is at least 10 mm, preferably at least 20 mm, more preferably at least 30 mm, and even more preferably at least 400 mm. Likewise, the term "discontinuous" as used herein, characterises a fibre with a lower length-to-diameter aspect ratio than a "continuous" fibre. In one embodiment, the aspect ratio is less than 2,000, preferably less than 1,000, and more preferably less than 500. In one embodiment, the diameter of a discontinuous fibre is between 1-200 µm. In one embodiment, the length of a discontinuous fibre is less than 20 mm, preferably less than 1 mm, and even more preferably less than 0.5 mm.

Preferably the fibre material is a glass fibre material, and more preferably a continuous glass fibre material.

The fibre material may be pre-treated by any of a plasma treating step, an etching step, an air abrasion step, and a sizing step, such as a silane coating step for glass fibres. The term "pre-treated" as used herein means that the fibre has been treated prior to impregnation with the dissolved covalently adaptable network precursor composition. The above pre-treatment steps may further improve the adhesion between the fibre material and the covalently adaptable network. In one embodiment, the pre-treatment includes a sizing step using silane, in which a thin homogenous silane layer is applied on the surface of the glass fibres.

Preferably, the fibre composite material comprises at least 20 wt% fibre material relative to the total weight of the composite, preferably at least 40 wt%, and even more preferably at least 55 wt%; and at most 99 wt% fibre material relative to the total weight of the composite, preferably at most 90 wt%, and even more preferably at most 80 wt%.

Preferably, the fibre composite material substantially consists of the covalently adaptable network, and the fibre material. In a preferred embodiment, the covalently adaptable network and the fibre material comprise at least 60 wt% relative to the total weight of the fibre composite material, preferably at least 70 wt%, more preferably at least 80 wt%, and even more preferably at least 90 wt%.

Preferably, the fibre composite material further comprises an additive selected from any of a fire retardant additive, a UV stabiliser, a filler, an antioxidant, a mould release agent, a pigment, or any combination thereof. More preferably, the fibre composite material comprises aluminium trihydrate (ATH) as a fire retardant additive.

Preferably, said additive is contained in amount of at most 40 wt% relative to the total weight of the fibre composite material, preferably at most 30 wt%, more preferably at most 20 wt%, and even more preferably at most 10 wt%.

Preferably, the fibre composite material is recyclable, optionally wherein at least 60 wt% of the material are recoverable according to the method for recycling disclosed below, preferably at least 70 wt%, more preferably at least 80 wt%, more preferably at least 90 wt%, and even more preferably at least 95 wt.

The viscosity of the dissolved covalently adaptable network precursor composition may be controlled by adjusting the amount of prepreg solvent to copolymer and/or crosslinking agent. Preferably, the viscosity is at most 10,000 mPa.s, more preferably at most 9,000 mPa.s, more preferably at most 8,000 mPa.s, more preferably at most 7,000 mPa.s, more preferably at most 6,000 mPa.s, more preferably at most 5,000 mPa.s, more preferably at most 4,000 mPa.s, more preferably at most 3,000 mPa.s, more preferably at most 2,000 mPa.s, more preferably at most 1,000 mPa.s, more preferably at most 800 mPa.s, more preferably at most 600 mPa.s, more preferably at most 400 mPa.s, and even more preferably at most 200 mPa.s. The viscosity may be measured by a rotational viscosimeter at 100 rpm.

Preferably, the fibre composite material has a flexural strength (FS)of at least 50 MPa, more preferably at least 100 MPa, more preferably at least 200 MPa, more preferably at least 300 MPa, more preferably at least 400 and even more preferably at least 500 MPa. The flexural strength is measured according to ISO 14125.

Preferably, the fibre composite material has a flexural modulus of at least 15 GPa, more preferably at least 16 GPa, more preferably at least 17 GPa, more preferably at least 18 GPa, more preferably at least 19 GPa, more preferably at least 20 GPa, more preferably at least 21 GPa, more preferably at least 22 GPa, more preferably at least 23 GPa, more preferably at least 24 GPa, more preferably at least 25 GPa, and even more preferably at least 26 GPa. The flexural modulus is measured according to ISO 14125.

Preferably, the fibre composite material has a flexural failure strain of at least 2%, more preferably at least 3%, and even more preferably at least 4%, wherein the flexural failure strain is measured according to ISO 14125.

The method of recycling the fibre composite material comprises re-dissolving the fibre composite material in a solvent, de-crosslinking the covalently adaptable network as described in the first aspect, filtering out the fibre material, and drying the filtrate to obtain recovered copolymer, the crosslinking agent, and the fibre material. Thus, the recoverable material preferably includes the fibre material, the recovered copolymer, the crosslinking agent, and optionally the filler. Recovered copolymer, crosslinking agent, fibre material, and optionally the filler, may be re-used in a similar process, such as making new fibre composite materials.

The present disclosure also relates to a method of recycling the prepreg fibre composite material as described above.

### Infusion fibre composite material

In a fifth aspect, the present invention relates to a fibre composite material, comprising a covalently adaptable network and a fibre material, wherein the material is obtainable by a liquid composite moulding technique, comprising the steps of:
(a) providing a copolymer comprising
   - units of a comonomer having reactive sites, and
   - a copolymer backbone,
(b) providing a crosslinking agent,
(c) dissolving the copolymer and the crosslinking agent in a curable solvent comprising
   (c.1) a first type of curable molecules, and
   (c.2) optionally, a second type of curable molecules, further comprising reactive groups configured to react with the crosslinking agent, wherein the first type and the second type of curable molecules are different from each other and are configured to copolymerise into a copolymer upon curing,
      to obtain a liquid resin covalently adaptable network precursor composition,
(d) transferring the liquid resin covalently adaptable network precursor composition into a mould containing the fibre material, and
(e) curing the liquid resin covalently adaptable network precursor composition, and crosslinking the copolymer to obtain a covalently adaptable network and consolidating the fibre composite material, optionally by utilizing a further manufacturing processing step, such as vacuum assisted resin infusion, resin transfer moulding, wet layup, hand layup, pultrusion, filament winding,3D printing, and/or layering to form a laminate,
whereupon decrosslinking the covalently adaptable network, the copolymer backbone remains intact.

The fibre composite material of the fifth aspect may also be referred to as an "infusion fibre composite material". Unless specified otherwise, the expression "the fibre composite material" or simply "the composite" in this aspect of the present disclosure relates to the fibre composite material according to the fifth aspect.

The definitions of terms from the first aspect apply *mutatis mutandis* to the fifth aspect.

The present disclosure also relates to a method for preparing the fibre composite material according to the fifth aspect. The definitions and steps further described below apply to the fibre composite and the method for preparing the fibre composite material *mutatis mutandis.*

The fibre material of the fifth aspect is typically characterised in the same way as the fibre material of the fourth aspect. The fibre material of the fifth aspect may be pre-treated as the fibre material of the fourth aspect.

In a preferred embodiment, the covalently adaptable network which is comprised in the fibre composite material according to the fifth aspect of the present invention is the covalently adaptable network of the first aspect. As such, all limitations of the covalently adaptable network of the first aspect may apply individually or in combination to the covalently adaptable network which is comprised in the fibre composite material according to the fifth aspect, *mutatis mutandis.* Similarly, all limitations to the copolymer and the crosslinking agent disclosed in the first aspect may apply individually or in combination *mutatis mutandis* to the fifth aspect.

In a preferred embodiment, the covalently adaptable network has a Tg of at least 116 °C, preferably at least 120 °C. The Tg is determined in the same way as in the first aspect.

The fibre composite material according to the fifth aspect of the present invention is thus obtainable by a liquid composite moulding technique, comprising the steps of
(a) providing a copolymer comprising
   - units of a comonomer having reactive sites, and
   - a copolymer backbone,
(b) providing a crosslinking agent,
(c) dissolving the copolymer and the crosslinking agent in a curable solvent comprising
   (c.1) a first type of curable molecules, and
   (c.2) optionally, a second type of curable molecules, further comprising reactive groups configured to react with the crosslinking agent,
   wherein the first type and the second type of curable molecules are different from each other and are configured to copolymerise into a copolymer upon curing,
   to obtain a liquid resin covalently adaptable network precursor composition,
(d) transferring the liquid resin covalently adaptable network precursor composition into a mould containing the fibre material, and
(e) curing the liquid resin covalently adaptable network precursor composition, and crosslinking the copolymer to obtain a covalently adaptable network and consolidating the fibre composite material, optionally by utilizing a further manufacturing processing step, such as vacuum assisted resin infusion, resin transfer moulding, wet layup, hand layup, pultrusion, filament winding,3D printing, and/or layering to form a laminate,
whereupon decrosslinking the covalently adaptable network, the copolymer backbone remains intact.

The steps (a) and (b) are typically identical to the steps (i) and (ii) of the first aspect.

In step (c), the copolymer and the crosslinking agent are dissolved in a curable solvent to obtain a liquid resin covalently adaptable network precursor composition. The liquid resin covalently adaptable network precursor composition may simply be referred to as "the liquid resin". The curable solvent comprises curable molecules which can cure (=polymerise) to form a polymer or a mixture of polymers. Said curable molecules are (c.1) a first type of curable molecules, and (c.2) optionally, a second type of curable molecules, further comprising reactive groups configured to react with the crosslinking agent. When the (c.2) second type of curable molecules are present, they are different from the first type of curable molecules. When only the (c.1) first type of curable molecules are present, they can polymerise into a polymer consisting of units of monomers of the first type of curable molecule. When the (c.2) second type of curable molecules are present as well, the first and second type of curable molecules are further configured to copolymerise into a copolymer upon curing, said copolymer consisting of units of monomers of the first of curable molecules, and units of monomers of the second type of curable molecule.

In step (d), the liquid resin covalently adaptable network precursor composition is transferred into a mould containing the fibre material. This can be accomplished using different manufacturing techniques, including vacuum infusion where the liquid resin is transferred into the mould using vacuum pressure, or via resin transfer moulding (RTM) technique where higher than atmospheric pressures are used for the transfer. Preferably, the fibre material being in the mould prior to the resin transfer step is dry. During said transfer step, the liquid resin covalently adaptable network precursor composition impregnates the fibre material. Typically, the step (d) further comprises a step of adding a curing agent.

In step (e), the liquid resin covalently adaptable network precursor composition is cured. During the curing, the curable solvent polymerises to form a polymer. This polymer may herein be referred to as "Polymer 2". Said Polymer 2 may be one polymer or a mixture of polymers. When only the (c.1) first type of curable molecules are present, the Polymer 2 consists of units of monomers of the first type of curable molecules. When the (c.2) second type of curable molecules are present, the Polymer 2 consists of units of monomers of the first type of curable molecules and the second type of curable molecules. The curing of step (e) may be carried out at 50 °C or more, or at room temperature in combination with a suitable accelerator.

During the curing, the covalently adaptable network precursors provided in steps (a) and (b), and dissolved in step (c), re-precipitate. The copolymer is then crosslinked to obtain the covalently adaptable network, wherein the crosslinking occurs substantially similar to the crosslinking of the first aspect. Said crosslinking may be further effected through an external stimulus such as heating, irradiating with light, or the addition of a catalyst, or a combination of any of the above. The covalently adaptable network obtained in step (e) may also be referred to as "Polymer 1". The fibre composite material thus comprises at least two types of polymers, namely Polymer 1 and Polymer 2. When the (c.2) second type of curable molecules are present, the Polymer 2 also comprises reactive groups configured to react with the crosslinking agent.

Upon the obtaining the covalently adaptable network the fibre composite material is consolidated. "Consolidating the fibre composite material" means consolidating the covalently adaptable network, the Polymer 2 and the fibre material into the fibre composite material. Optionally, consolidating the fibre composite material may utilize a further manufacturing processing step, such as thermoforming, compression moulding, vacuum assisted moulding, press consolidation, automated fibre and tape placement, automated fibre and tape winding, autoclave consolidation, 3D printing, and/or layering to form a laminate. Through such an optional further manufacturing processing step, the fibre composite material can be further strengthened. Moreover, through such a further manufacturing processing step, the fibre composite material can be arbitrarily shaped and/or moulded into a fibre composite article.

Without wishing to be bound by theory, the present inventors submit that through said infusion technique a favourable adhesion between the covalently adaptable network, and the fibre material can be achieved, resulting in a fibre composite material with strong mechanical performance which is simultaneously recyclable. Moreover, the liquid resin covalently adaptable network precursor composition can move efficiently into the inter-fibre space leading to good mixing between the fibre material and the covalently adaptable network and the Polymer 2, which affords the material strengthened mechanical properties.

Preferably, the reactive groups on the (c.2) second type of curable molecules are identical to the reactive sites on the units of comonomer of the copolymer provided in step (a). Thus, upon crosslinking in step (e), the Polymer 2 may be crosslinked as well, and the Polymer 2 may also include a covalently adaptable network.

Preferably, the (c.1) first type of curable molecules corresponds to units of comonomer of the copolymer provided in step (a), which units do not have reactive sites. Preferably, the (c.2) second type of curable molecules corresponds to the units of comonomer of the copolymer provided in step (a), which have the reactive sites.

Preferably, the copolymer provided in step (a) is SMA and/or SMI, the (c.1) first type of curable molecules is styrene, and the (c.2) second type of curable molecules is maleic anhydride and/or maleic imide. Accordingly, the Polymer 1 may comprise a covalently adaptable network similar to that of the first aspect, and the Polymer 2 may comprise polystyrene, and optionally SMA and/or SMI and/or a further covalently adaptable network. It is believed that such a fibre composite material has a particularly high thermomechanical resistance and strong mechanical properties as indicated above. In addition, the liquid resin covalently adaptable network precursor composition is believed to have a high boiling point of around 145 °C, which enables higher reactivity and curing rates. The fibre composite materials can therefore be produced efficiently and cost effectively.

The fibre composite material of the fifth aspect typically comprises the same amount of fibre material as the fibre composite material of the fourth aspect.

Preferably, the fibre composite material substantially consists of the covalently adaptable network, the Polymer 2, and the fibre material. Preferably, the covalently adaptable network, the Polymer 2, and the fibre material comprise at least 80 wt% relative to the total weight of the fibre composite material, preferably at least 85 wt%, more preferably at least 90 wt%, and even more preferably at least 95 wt%.

The fibre composite material of the fifth aspect may comprise the same additives and in the same amounts as the fibre composite material of the fourth aspect.

The fibre composite material of the fifth aspect is typically as recyclable as the fibre composite material of the fourth aspect. The method of recycling the fibre composite material of the fifth aspect is typically the same as the method of recycling the fibre composite material of the fourth aspect. Herein, the recoverable material preferably includes the fibre material, the recovered copolymer, the crosslinking agent, and the Polymer 2. In this context, the recovered Polymer 2 preferably consists of units of monomers corresponding to the (c.1) first type of curable molecules. For instance, if the (c.1) first type of curable molecules is styrene, the recoverable Polymer 2 is polystyrene. Recovered copolymer, crosslinking agent, Polymer 2, and fibre material may be re-used in a similar process, such as making new fibre composite materials.

In a preferred embodiment, at most 60 wt% of the covalently adaptable network precursors provided in step (a) and (b) are dissolved in the curable solvent in step (c), wherein the wt% is relative to the total mass of the liquid resin covalently adaptable network precursor composition. Thus, the liquid resin covalently adaptable network precursor composition comprises 40 wt% curable solvent, and 60 wt% covalently adaptable network precursors.

In one embodiment, in step (c), at most 50 wt% covalently adaptable network precursors are dissolved in at least 50 wt% curable solvent, wherein the wt% is relative to the total mass of the liquid resin covalently adaptable network precursor composition. Preferably, at most 45 wt% covalently adaptable network precursors are dissolved in at least 55 wt% curable solvent, more preferably at most 40 wt% covalently adaptable network precursors are dissolved in at least 60 wt% curable solvent, more preferably at most 35 wt% covalently adaptable network precursors are dissolved in at least 65 wt% curable solvent, and even more preferably at most 30 wt% covalently adaptable network precursors are dissolved in at least 70 wt% curable solvent.

In one embodiment, the curable solvent consists of styrene. In another embodiment, the curable solvent consists of styrene and maleic anhydride. Preferably, the curable solvent consists of at most 95 wt% styrene and 5 wt% maleic anhydride, relative to the total weight of the curable solvent. More preferably the curable solvent consists of at most 90 wt% styrene and 10 wt% maleic anhydride, even more preferably the curable solvent consists of at most 85 wt% styrene and 15 wt% maleic anhydride, more preferably the curable solvent consists of at most 80 wt% styrene and 20 wt% maleic anhydride, more preferably the curable solvent consists of at most 75 wt% styrene and 25 wt% maleic anhydride and even more preferably the curable solvent consists of at most 66.6 wt% styrene and 33.3 wt% maleic anhydride.

It is believed that by increasing the content of maleic anhydride in the curable solvent, the viscosity of the liquid resin covalently adaptable network precursor composition can be lowered ensuring efficient impregnation of the fibre material during the resin transfer step. A liquid resin with a lower viscosity can therefore move efficiently into the inter-fibre space. Consequently, the impregnation process is fast and efficient, and relatively complex shapes in the moulds can be assumed.

Preferably, the viscosity of the liquid resin covalently adaptable precursor composition is at most 10,000 mPa.s, more preferably at most 9,000 mPa.s, more preferably at most 8,000 mPa.s, more preferably at most 7,000 mPa.s, more preferably at most 6,000 mPa.s, more preferably at most 5,000 mPa.s, more preferably at most 4,000 mPa.s, more preferably at most 3,000 mPa.s, more preferably at most 2,000 mPa.s, more preferably at most 1,000 mPa.s, more preferably at most 800 mPa.s, more preferably at most 600 mPa.s, more preferably at most 400 mPa.s, and even more preferably at most 200 mPa.s.

The viscosity is preferably measured by a rotational viscosimeter at 100 rpm.

Preferably, the fibre composite material has a flexural strength (FS)of at least 50 MPa, more preferably at least 100 MPa, more preferably at least 200 MPa, more preferably at least 300 MPa, more preferably at least 400 and even more preferably at least 500 MPa. The flexural strength is measured according to ISO 14125.

Preferably, the fibre composite material has a flexural modulus of at least 15 GPa, more preferably at least 16 GPa, more preferably at least 17 GPa, more preferably at least 18 GPa, more preferably at least 19 GPa, more preferably at least 20 GPa, more preferably at least 21 GPa, more preferably at least 22 GPa, more preferably at least 23 GPa, more preferably at least 24 GPa, more preferably at least 25 GPa, and even more preferably at least 26 GPa. The flexural modulus is measured according to ISO 14125.

Preferably, the fibre composite material has a flexural failure strain of at least 2%, more preferably at least 3%, and even more preferably at least 4%, wherein the flexural failure strain is measured according to ISO 14125.

The present disclosure also relates to a method of recycling the infusion fibre composite material as described above.

Typically, the step (d) further comprises a step of adding a curing agent, optionally said curing agent including any of organic peroxides, such as diacyl peroxides, peroxy esters, dialkyl peroxides, peroxyacetals, or azo compounds, or any combination thereof, preferably said curing agent including azobisisobutyronitrile (AIBN), benzoyl peroxide, and/or methyl ethyl ketone peroxide (MEKP).

In a preferred embodiment according to the second aspect of the present invention, the curing of step (e) is carried out at 50 °C or more, or at room temperature in combination with a suitable accelerator.

The accelerator may be added in addition to the curing agent in step (d). Suitable accelerators include but are not limited to cobalt(2+) bis(2-ethyl-2,5-dimethylhexanoate) for MEKP, or dimethylaniline for benzoyl peroxide.

The present disclosure also relates to a method of recycling the infusion fibre composite material as described above.

### Method of processing the covalently adaptable network

In sixth aspect, the present invention relates to a method of processing the covalently adaptable network according to the first aspect, wherein the method includes any of injection moulding, sheet and film extrusion, blow moulding, coating, dipping, fused deposition modelling, and spraying.

The definitions of terms from the first aspect apply *mutatis mutandis* to the sixth aspect.

The present disclosure also relates to an object obtainable by said method.

### Use of the covalently adaptable network and/or the fibre composite materials in an article

In seventh aspect, the present invention relates to the use of the covalently adaptable network according to the first aspect and/or the fibre composite materials according to the fourth and the fifth aspects in an article, preferably said article being any of electronics equipment, aerospace materials, wind turbines, casings, marine structures, pipes, tanks, construction structures, transportation vehicles and/or infrastructure, defence materials, consumer goods, circuit boards, and battery casings.

The definitions of terms from the first aspect, fourth and fifth aspect, apply *mutatis mutandis* to the seventh aspect.

The present disclosure also relates to an article comprising the covalently adaptable network according to the first aspect and/or the fibre composite materials according to the fourth and the fifth aspect, preferably said article being any of electronics equipment, aerospace materials, wind turbines, casings, marine structures, pipes, tanks, construction structures, transportation vehicles and/or infrastructure, defence materials, consumer goods, circuit boards, and battery casings.

Based on the foregoing discussion, the following examples, and without wishing to be bound by theory, the inventors have provided a recyclable covalently adaptable network and composites comprising the same.

### Examples

The present invention is exemplified by the following, non-limiting examples.

The following methods of characterisation were used throughout the examples: The weight average molecular weight was measured using gel permeation chromatography (GPC) using narrow molecular weight polystyrene standards, THF as a solvent and a UV or diode array detector with a typical detection wavelength of 254 nm. The glass transition temperature was measured using differential scanning calorimetry (DSC) following the ASTM D3418 protocol. The functional group ratio was determined as described above. The flexural strength, flexural modulus and flexural failure stress were determined according to ISO 14125. The total glass fibre content in the composite was determined using thermogravimetric analysis as the residual mass at 800 °C. The viscosity was determined using a rotational viscosimeter at 100 rpm.

### Example A

150g of SMA copolymer and 5.4 g of glycerol are dissolved in 550g of acetone. The acetone is evaporated at room temperature after which the remaining solvent is evaporated under vacuum at 70°C. The obtained material is ground into a powder. In subsequent experiments, the glycerol content was adjusted as shown below.

Subsequently, the powder is consolidated in a mould and placed in a heated press with a pressure of 10 kN. The temperature of the press was increased to 260°C. The temperature was kept constant for 30 minutes. After cooling the plates to 50°C, the pressure of the press was released and the mould containing the vitrimer material was removed.

**Table A1**

| Example | Sample | MW SMA (g/mol) | Functional group ratio | Tg (°C) |
|---|---|---|---|---|
| A1.1 (comparative) | SMA 15% MA content | 170,000 | - | 134 |
| A1.2 | SMA 15% | | 1:0.5 | 137 |
| A1.3 (comparative) | SMA 23% MA content | 115,000 | - | 152 |
| A1.4 | SMA 23% | | 1:0.5 | 153 |

**Table A2**

| Example | Sample (MA content %)Mw | Functional group ratio | Tg (°C) |
|---|---|---|---|
| A2.1 (comparative) | SMA 23% Mw 115,000 g/mol | - | 152.0 |
| A2.2 | SMA 23% Mw 115,000 g/mol | 1:0.5 | 153.4 |
| A2.3 | SMA 23% Mw 115,000 g/mol | 1:0.75 | 153.6 |
| A2.4 | SMA 23% Mw 115,000 g/mol | 1: 1 | 154.1 |

Samples A1.2, A1.4, A2.2, A2.3, A2.4 are vitrimers. They are crosslinked and therefore not soluble. SMA (Samples A1.1 and A2.1) are soluble in standard solvents like acetone, tetrahydrofuran and dichloromethane. The mentioned vitrimers are not soluble. The vitrimers can be grinded and placed into a mould. After applying 260 C and 10 kN the individual fragments fuse together which is not possible with a standard crosslinked material as in this case the crosslinks are not dynamic.

Sample A1.4 was de-crosslinked in the presence of benzyl amine at 120 °C for 20 hrs. Relative to the mass of sample A1.4 provided, 62% of SMA 23% could be recovered.

Samples A4.1 and A4.2 were prepared as described above but with the following glycerol contents. Mechanical properties of the vitrimers were tested and are tabulated below.

**Table A4**

| Example | Sample | Functional group ratio | Flexural strength (MPa) | Flexural modulus (GPa) | Flexural failure strain (%) |
|---|---|---|---|---|---|
| A4.1 | SMA 23% MA content, Mw 115,000 g/mol | 1:1 | 55 | 35 | 1.5 |
| A4.2 | SMA 23% MA content, Mw 115,000 g/mol | 1:1.5 | 63 | 28 | 2 |

### Example B

150 g of SMA (23% MA content) and 10,8g Glycerol, are dissolved in 850 g of acetone solvent. Unidirectional glass fibre fabrics (Metys L600E10C-0 600 gsm) with 15 meters length were impregnated by the solution by wetting the fiber through a bath of SMA in solvent at a consistent speed. Subsequently, the solvent was allowed to evaporate after which a unidirectional glass fibre reinforced SMA prepreg was obtained. The glass fibre volume fraction was approximately 50%. The nominal size of the prepreg was 30 x 30 cm.

A total of 4 layers of said prepregs were laminated manually. Subsequently, the 4 layers of prepreg were consolidated in a heated press with a pressure of between 1-10 MPa. The temperature of the press increased from 20°C to 260 °C with a heating ramp of 20 °C/min. The temperature kept constant at 260 °C for a 30 min. After cooling with a rate of 20 °C/min, the pressure of the press was released and fully consolidated prepregs, i.e. the composite plate, was removed. This is only possible with vitrimer like structures as a standard crosslinked material will not flow and hence consolidation is impossible. The nominal thickness of the fully consolidated plate was 2 mm. Optionally, a thermoforming step can be applied to give a specific shape or geometry to the composite plate.

**Table B1**

| Example | Ash (wt%) | Flexural strength (MPa) | Flexural modulus (GPa) | Flexural failure strain (%) |
|---|---|---|---|---|
| Example B1.1 | 43% | 583 | 27 | 2.4 |
| Example B1.2 (comparative) | | 521 | 27 | |

Comparative Example B1.2 is based on a commercially available polypropylene/glass composite with a glass volume fraction of 35%.

The viscosity of the dissolved covalently adaptable network precursor composition was found to be largely independent of the crosslinker content. The viscosity values for various concentrations of SMA solutions in acetone are tabulated below.

**Table B2**

| SMA 23% MA content, MW = 115,000 | Viscosity (mPa.s) | SMA 25 wt% MA, Mw =5,000 g/mol | Viscosity (mPa.s) |
|---|---|---|---|
| 10 wt% | 10 | | |
| 20 wt% | 25 | 20 wt% | 22 |
| 30 wt% | 60 | 30 wt% | 220 |
| 40 wt% | 330 | 40 wt% | 1590 |

## Claims

1. A covalently adaptable network (CAN) having a glass transition temperature (Tg) of at least 116 °C, preferably at least 120 °C, the covalently adaptable network being obtainable by the steps of
(i) providing a copolymer comprising -units of a comonomer having reactive sites, and
- a copolymer backbone,
(ii) providing a crosslinking agent configured to react with the reactive sites, and
(iii) contacting the crosslinking agent with the copolymer and crosslinking the copolymer to obtain the covalently adaptable network,
whereupon decrosslinking the covalently adaptable network, the copolymer backbone remains intact,
wherein the Tg is measured as described in the description.

2. The covalently adaptable network according to claim 1, wherein the covalently adaptable network is recyclable, optionally wherein at least 60 wt% of the material are recoverable according to the method for recycling disclosed in the description, preferably at least 70 wt%, more preferably at least 80 wt%, more preferably at least 90 wt%, and even more preferably at least 95 wt%.

3. The covalently adaptable network according to any of claims 1 or 2, wherein the reactive sites comprise anhydride groups and/or imide groups, and wherein the crosslinking agent comprises at least two nucleophilic moieties.

4. The covalently adaptable network according to claim 3, wherein the crosslinking agent is a polyol, a polyamine,a polythiol, or an agent having mixed functionality of any of the above, preferably a polyol.

5. The covalently adaptable network according to any of claims 1-4, wherein the polymer backbone substantially consists of carbon atoms attached to each other via C-C bonds.

6. The covalently adaptable network according to any of claims 1-5, wherein the copolymer is a styrene-maleic anhydride (SMA) copolymer or an at least partially imidized SMA copolymer (SMI) .

7. The covalently adaptable network according to claim 6, wherein
• the weight average molecular weight of the SMA or SMI is at least 5,000 g/mol, wherein the weight average molecular weight is determined as described in the description; and/or
• the maleic anhydride and/or maleic imide content is at least 5 wt% based on the total weight of the copolymer provided in step (i).

8. The covalently adaptable network according to any of claims 1-7, wherein
• the covalently adaptable network has a glass transition temperature (Tg) of at least 130 °C, wherein the Tg is measured as described in the description; and/or
• the covalently adaptable network has a stiffness of at least 1 GPa, wherein the stiffness is measured according to ISO527-4; and/or
• the covalently adaptable network has a failure strain of at least 2%, wherein the failure strain is measured according to ISO527-4.

9. The covalently adaptable network according to any of claims 1-8, wherein decrosslinking the covalently adaptable network can be effected by thermolysis or solvolysis, preferably by hydrolysis, aminolysis or alcoholysis, more preferably by alcoholysis.

10. A method for preparing a covalently adaptable network (CAN) having a glass transition temperature (Tg) of at least 116 °C, preferably at least 120 °C, comprising the steps of:
(i) providing a copolymer comprising
- units of a comonomer having reactive sites, and
- a copolymer backbone,
(ii) providing a crosslinking agent configured to react with the reactive sites, and
(iii) contacting the crosslinking agent with the copolymer and crosslinking the copolymer to obtain the covalently adaptable network,
whereupon decrosslinking the covalently adaptable network, the copolymer backbone remains intact, wherein the Tg is measured as described in the description.

11. A method of recycling the covalently adaptable network according to any of claims 1-9, wherein the method comprises a step of decrosslinking the covalently adaptable network whereupon the polymer backbone remains intact, and which is effected by thermolysis or solvolysis, preferably by hydrolysis, aminolysis or alcoholysis, more preferably by alcoholysis.

12. A fibre composite material, comprising a covalently adaptable network and a fibre material, wherein the fibre composite material is obtainable by a prepreg technique comprising the steps of:
(I) providing a copolymer comprising
- units of a comonomer having reactive sites, and
- a copolymer backbone,
(II) providing a crosslinking agent configured to react with the reactive sites,
(III) dissolving the copolymer and the crosslinking agent in a solvent to obtain a dissolved covalently adaptable network precursor composition,
(IV) impregnating the fibre material with the dissolved covalently adaptable network precursor composition,
(V) evaporating the solvent, and
(VI) crosslinking the copolymer to obtain the covalently adaptable network and consolidating the fibre composite material, optionally by utilizing a further manufacturing processing step, such as stamp forming, thermoforming, compression moulding, vacuum assisted moulding, press consolidation, automated fibre and tape placement, automated fibre and tape winding, autoclave consolidation,3D printing, and/or layering to form a laminate,
whereupon decrosslinking the covalently adaptable network, the copolymer backbone remains intact.

13. A fibre composite material, comprising a covalently adaptable network and a fibre material, wherein the material is obtainable by a liquid composite moulding technique, comprising the steps of:
(a) providing a copolymer comprising
- units of a comonomer having reactive sites, and
- a copolymer backbone,
(b) providing a crosslinking agent,
(c) dissolving the copolymer and the crosslinking agent in a curable solvent comprising
(c.1) a first type of curable molecules, and
(c.2) optionally, a second type of curable molecules, further comprising reactive groups configured to react with the crosslinking agent, wherein the first type and the second type of curable molecules are different from each other and are configured to copolymerise into a copolymer upon curing,
to obtain a liquid resin covalently adaptable network precursor composition,
(d) transferring the liquid resin covalently adaptable network precursor composition into a mould containing the fibre material, and
(e) curing the liquid resin covalently adaptable network precursor composition, and crosslinking the copolymer to obtain a covalently adaptable network and consolidating the fibre composite material, optionally by utilizing a further manufacturing processing step, such as vacuum assisted resin infusion, resin transfer moulding, wet layup, hand layup, pultrusion, filament winding,3D printing, and/or layering to form a laminate,
whereupon decrosslinking the covalently adaptable network, the copolymer backbone remains intact.

14. The fibre composite material according to any of claims 12 or 13, wherein the fibre composite material comprises continuous and/or discontinuous glass fibre material, carbon fibre material, aramid fibre material, basalt fibre material, and/or natural fibre material in the form fabrics, such as non-woven, woven, unidirectional, continuous filament mat, chopped strand mat, and direct rovings.

15. The fibre composite material according to any of claims 12, 13, or 14 wherein the fibre composite material comprises a fire retardant additive, preferably aluminium trihydrate (ATH).

16. A method of processing the covalently adaptable network according to any of claims 1-9, wherein the method includes any of injection moulding, sheet and film extrusion, blow moulding, coating, dipping, fused deposition modelling, and spraying.

17. An object obtainable by the method of claim 16.

18. Use of the covalently adaptable network according to any of claims 1-9 and/or the fibre composite materials according to any of claims 12-15 in an article, preferably said article being any of electronics equipment, aerospace materials, wind turbines, casings, marine structures, pipes, tanks, construction structures, transportation vehicles and/or infrastructure, defence materials, consumer goods, circuit boards, and battery casings.

19. Article comprising the covalently adaptable network according to any of claims 1-9 and/or the fibre composite materials according to any of claims 12-15, preferably said article being any of electronics equipment, aerospace materials, wind turbines, casings, marine structures, pipes, tanks, construction structures, transportation vehicles and/or infrastructure, defence materials, consumer goods, circuit boards, and battery casings.
